(19) Europäisches Patentamt

European Patent Office

Office européen des brevets

(11) **EP 0 796 830 B1**

(12) **EUROPÄISCHE PATENTSCHRIFT**

(45) Veröffentlichungstag und Bekanntmachung des Hinweises auf die Patenterteilung:
**21.08.2002 Patentblatt 2002/34**

(51) Int Cl.[7]: **C04B 38/00**, F01N 3/28, F01N 3/20

(21) Anmeldenummer: **96104647.1**

(22) Anmeldetag: **23.03.1996**

(54) **Poröser durchströmbarer Formkörper sowie Verfahren zu seiner Herstellung**

Porous permeable body and method for its preparation

Corps moulé laissant passer un courant de fluide et méthode pour sa fabrication

(84) Benannte Vertragsstaaten:
**AT BE CH DE ES FR GB GR IE IT LI NL PT SE**

(43) Veröffentlichungstag der Anmeldung:
**24.09.1997 Patentblatt 1997/39**

(73) Patentinhaber:
• **Thomas Josef Heimbach GmbH & Co.**
**D-52353 Düren (DE)**
• **Vereinigung zur Förderung des Instituts für Prozess- und Anwendungstechnik Keramik an der RWTH Aachen e.V.**
**52072 Aachen (DE)**

(72) Erfinder:
• **Maier, Horst R., Prof. Dr. Ing.**
**52076 Aachen (DE)**
• **Schumacher, Uwe, Dipl. Ing.**
**52224 Stolberg (DE)**
• **Best, Walter, Dr**
**52351 Düren (DE)**
• **Schäfer, Wolfgang, Dipl. Ing.**
**Düren (DE)**

(74) Vertreter: **Paul, Dieter-Alfred, Dipl.-Ing.**
**Paul & Albrecht**
**Patentanwaltssozietät**
**Hellersbergstrasse 18**
**41460 Neuss (DE)**

(56) Entgegenhaltungen:
**EP-A- 0 336 883          DE-A- 3 305 529**
**DE-A- 3 516 587          DE-A- 4 130 630**
**DE-A- 4 413 127**

• **DATABASE WPI Section Ch, Week 9521 Derwent Publications Ltd., London, GB; Class H06, AN 95-157984 XP002012249 & JP-A-07 080 226 (IBIDEN CO LTD) , 28.März 1995**
• **CHEMICAL ABSTRACTS, vol. 113, no. 26, 24.Dezember 1990 Columbus, Ohio, US; abstract no. 236530a, XP000184715 & JP-A-02 097 472 (IBIDEN CO. LTD) 10.April 1990**
• **CHEMICAL ABSTRACTS, vol. 112, no. 4, 22.Januar 1990 Columbus, Ohio, US; abstract no. 24716v, XP000154836 & JP-A-01 145 378 (IBIDEN CO. LTD) 30.November 1987**

**Beschreibung**

Die Erfindung betrifft einen porösen durchströmbaren Formkörper insbesondere zum Abscheiden von Dieselrußpartikeln aus dem Abgas eines Dieselmotors, bestehend aus einem wechselseitig verschlossenen Wabenkörper aus Siliciumcarbid. Ferner betrifft die Erfindung ein Verfahren zur Herstellung solcher Formkörper, bei dem ein Ausgangspulver aus Silicium oder einer Mischung aus Silicium mit Anteilen an Siliciumcarbid und/oder Kohlenstoff zusammen mit einem verkokbaren organischer Binder zu einem Grünkörper geformt, insbesondere stranggepreßt wird, der dann in einer Inertgasatmosphäre einem Verkokungsbrand unterzogen wird, wonach der so entstandene Formkörper in Anwesenheit von Stickstoff oder eines stickstoffhaltigen Inertgases auf eine solche Temperatur erhitzt wird, daß das freie Silicium mit dem Kohlenstoff in einem Reaktionsbrand zu Siliciumcarbid umgesetzt wird.

Als Filterelemente, aber auch als Träger für Katalysatoren gewinnen keramische Formkörper zunehmende Bedeutung, insbesondere was die Filtrierung von heißen Gasen angeht, da solche Formkörper außerordentlich temperaturbeständig sind. Dabei hat man vor allem die Entfernung von Rußpartikeln im Abgas von Dieselmotoren im Auge, da man diesen Rußpartikeln cancerogene Wirkungen zuschreibt.

Als besonders geeignet erweist sich der Werkstoff Siliciumcarbid. Er ist chemisch stabil und hat eine hohe Temperatur- und Temperaturwechselbeständigkeit. Trotz einer Reihe von Versuchen macht es jedoch nach wie vor Schwierigkeiten, aus diesem Werkstoff einen allen Anforderungen gerecht werdenden Formkörper herzustellen. Dabei werden unterschiedliche Wege beschritten.

Bei dem gattungsgemäßen Verfahren nach der DE-C-41 30 630 wird ein Ausgangspulver aus Silicium oder aus Silicium und Kohlenstoff und/oder $\alpha$-Siliciumcarbid gebildet. Zusammen mit einem verkokbaren organischen Binder und einem Lösungsmittel, vorzugsweise Wasser, wird ein Grünkörper beispielsweise durch Strangpressen geformt, der dann in einer in Inertgasatmosphäre oder im Vakuum durch Aufheizen auf eine Temperatur im Bereich von 600 bis 1000°C verkokt wird. Anschließend wird der so entstandene Formkörper einem Reaktionsbrand im Temperaturbereich zwischen 1400 und 2000°C unterzogen. Dabei wird das Silicium mit dem Kohlenstoff zu $\beta$-Siliciumcarbid umgesetzt.

Für den Einsatz bei Dieselmotoren ist es wichtig, daß die sich am Formkörper abgelagerten Rußteilchen in regelmäßigen Abständen abgereinigt werden, damit der Durchströmwiderstand nicht zu hoch wird. Hierzu werden die Rußteilchen abgebrannt, indem der Formkörper durch Anlegen eines elektrischen Stroms entsprechend aufgeheizt wird. Siliciumcarbid hat allerdings einen relativ hohen Widerstand, so daß hohe Spannungen notwendig wären, um den Formkörper auf eine entsprechende Temperatur aufzuheizen. Deshalb beeinflußt man die elektrische Leitfähigkeit von Siliciumcarbid durch Dotierung mit verschiedenen Stoffen, insbesondere Stickstoff. Bei dem oben beschriebenen Verfahren geschieht dies entweder durch Zugabe einer geeigneten Verbindung in dem Pulver oder mittels Durchführung des Reaktionsbrands in einer Stickstoff- oder stickstoffhaltigen Atmosphäre.

In der Praxis sind dem vorbeschriebenen Verfahren Grenzen gesetzt. Die mit diesem Verfahren erreichbare Porenstruktur ermöglicht eine befriedigende Durchströmbarkeit nur dann, wenn außerordentlich geringe Wandstärken unter 1 mm vorgesehen werden. Schon bei der Herstellung des Grünkörpers machen so geringe Wandstärken Schwierigkeiten. Noch gravierender ist der Umstand, daß ein solcher Formkörper keine ausreichende Festigkeit hat. Dabei ist zu berücksichtigen, daß ein solcher Formkörper gerade im Einsatz an Dieselmotoren erheblichen Erschütterungen ausgesetzt ist.

Um eine den Anforderungen gerecht werdende Durchströmbarkeit mit ausreichender Festigkeit zu verwirklichen, hat man Versuche mit einer zweiten Variante des vorbeschriebenen Verfahrens angestellt. Bei dieser Variante wird zunächst ein Granulat gebildet, das dann durch quasi-isostatische Verpressung zu dem Grünkörper geformt wird. Abgesehen davon, daß dies einen zusätzlichen Verfahrensschritt erfordert, fallen hierbei Wandstärken im Zentimeter-Bereich an. Zwar lassen sich die Wandstärken durch spanabhebende Bearbeitung verringern, jedoch aus Stabilitätsgründen allenfalls auf die Hälfte. Auch dann ist das Bauvolumen pro Filterfläche relativ groß, zumal mit diesem Verfahren nur einfache Rohrgeometrien verwirklichbar sind. Hinzu kommt, daß der Energiebedarf für die Regeneration selbst dann hoch ist, wenn der spezifische Widerstand durch Dotierung mit Stickstoff herabgesetzt wird. Im übrigen macht die nachträgliche Bearbeitung des Formkörpers die Herstellung noch aufwendiger.

Ein anderer Weg wird bei dem Verfahren gemäß der EP-A-0 336 883 gegangen. Soweit dort Siliciumcarbid-Formkörper vorgeschlagen werden, wird als Ausgangsmaterial primäres Siliciumcarbidpulver im Korngrößenbereich 75 bis 170 $\mu$m verwendet. Aus dem Pulver wird zusammen mit einem Binder ein Grünkörper geformt, der anschließend auf eine Temperatur zwischen 1500 bis 1900°C erhitzt wird, um den Binder zu entfernen oder zu härten, um die Siliciumcarbid-Partikel durch Fremdphase aneinanderzubinden.

Auch mit diesem Verfahren können keine befriedigende Formkörper hergestellt werden. Durch die Fremdphase werden die thermische und chemische Beständigkeit negativ beeinflußt. Eine hohe Festigkeit oder eine elektrische Leitfähigkeit kann nicht erzeugt werden. Bei der Sinterung tritt üblicherweise eine lineare Schwindung von 15 % und mehr auf mit der Folge, daß die Herstellung maßgenauer und verzugfreier Geometrien schwierig ist. Die Durchströmbarkeit ist auch bei Verwendung relativ grober SiC-Partikel nicht befriedigend, es sei denn, man geht auch hier auf sehr dünne, den Stabilitätsanforderungen nicht genügende Wandstärken über. Die Korngröße der Siliciumpartikel kann andererseits nicht beliebig vergrößert werden, da auch dies zu Festigkeitsproblemen führt. Ein weiterer Nachteil besteht darin, daß Siliciumcarbid-Pulver außerordentlich abrasiv wirkt, was zu hohem Verschleiß bei der Masseaufbereitung, der Extrusion und eventueller Bearbeitungsschritte führt.

Bei dem Verfahren nach der WO 93/13303 werden als Ausgangsmaterial Siliciumcarbid-Partikel in einer bimodalen Kornverteilung verwendet, und zwar etwa 70 Gew.-% Grobkorn in einem Größenbereich zwischen 35 und 125 µm und etwa 4 bis 13 % Feinkorn im Größenbereich 0,3 bis 2 µm. Nach Zusatz eines Binders wird ein Grünkörper geformt, der auf 300 bis 500°C erhitzt wird, um den Binder wegzubrennen. Anschließend wird der so gebildete Formkörper auf eine Temperatur oberhalb von 2200°C bis 2600°C erhitzt, um das Feinkorn zu zersetzen. Das Zersetzungsprodukt setzt sich in einem Verdampfungs-Kondensationsmechanismus als Sublimat an den Berührungspunkten der groben Partikel ab und schafft somit feste Brücken zwischen diesen Partikeln.

Dieses Verfahren hat zwar den Vorzug, daß keine Schwindung auftritt, so daß sich Formkörper mit guter Durchströmbarkeit und Stabilität herstellen lassen. Nachteilig ist jedoch, daß für die Ingangsetzung des Verdampfungs-Kondensationsmechanismus' außerordentlich hohe Temperaturen im Bereich 2500°C erforderlich sind, was einen entsprechenden Energieaufwand zur Folge hat. Außerdem erzeugt das Ausgangsmaterial auch hier hohen Verschleiß bei der Masseaufbereitung, der Extrusion des Formkörpers und eventueller Bearbeitungsschritte. Das in jedem Fall erforderliche Feinkorn ist relativ teuer. Durch die bimodale Kornverteilung besteht bei der Herstellung die Gefahr einer "Phasentrennung".

In der US-A-4 777 152 ist ein Verfahren zur Herstellung u. a. von Filtern beschrieben, bei dem als Ausgangsmaterial zu mehr als 90 % SiC in einer $\alpha$- und $\beta$-Modifikation und als amorphes SiC zusammen mit einem Binder verwendet wird. Als unvermeidliche Verunreinigungen können auch weitere Substanzen vorhanden sein, u. a. Silicium. Die Verunreinigungen sollen jedoch unterhalb von 10 % liegen. Das Ausgangsmaterial wird dann geformt und anschließend auf eine Temperatur von 1700 bis 2300°C, vorzugsweise 1900 bis 2000°C, erhitzt. Hierdurch soll ein Kristallwachstum und damit eine hohe Porosität erzielt werden.

Mit dem Verfahren sind jedoch eine Reihe von Nachteilen verbunden. Der hohe SiC-Anteil führt zu Schwierigkeiten bei der Formung des Grünkörpers, insbesondere wenn dies mittels Extrusion geschieht. Auch hat sich gezeigt, daß der Grünkörper nur eine geringe Stabilität hat. Die Porosität ist nur wenig besser als bei dem Verfahren nach der DE-C-41 30 630, d. h. sie ist immer noch unbefriedigend und erfordert deshalb dünne Wandungen mit entsprechend geringer Stabilität. Außerdem ist der elektrische Widerstand so hoch, daß ein Abbrennen der Dieselrußpartikel mittels Durchleitung von elektrischem Strom praktisch nicht möglich ist.

In Database Chemical Abstracts, Accession No. 113:23650a ist ein Formkörper für die Verwendung als Abgasfilter offenbart, der aus einem größeren Anteil SiC und einem kleineren Anteil eines anderen Carbids hergestellt ist. Wie dieser Formkörper hergestellt worden ist, ist dem Dokument nicht zu entnehmen. In Database WPI: Accession number 95-157984 ist ein Verfahren zur Herstellung eines Formkörpers für Abgasfilter offenbart, bei dem pulvriges SiC, ein Binder und wahlweise ein Kristallwachstumsförderer vermischt werden und dann einem Oxidationssintern bei Temperaturen von 2000 bis 2400° und einem Endsintern bei Temperaturen von 1700 bis 2300° C unterzogen wird. Aufgrund des Ausgangsmaterials hat der so gebildete Formkörper die gleichen Nachteile wie der nach dem Verfahren, das in der US-A-4,777,152 beschrieben ist.

Der Erfindung liegt die Aufgabe zugrunde, einen Formkörper insbesondere für die Abscheidung von Dieselrußpartikel bereitzustellen, der optimale Eigenschaften mit Blick auf Filterwirksamkeit, Durchströmbarkeit, Festigkeit und elektrischen Widerstand hat. Ferner ist die Aufgabe gestellt, ein Verfahren zu konzipieren, mit dem sich ein solcher Formkörper reproduzierbar und zudem mit geringem Verschleiß bei der Herstellung des Grünkörpers fertigen läßt.

Der erste Teil dieser Aufgabe wird erfindungsgemäß durch einen Formkörper aus einem an den Enden wechselseitig verschlossenen Wabenkörper gelöst, der durch folgende Merkmale gekennzeichnet ist:

| | |
|---|---|
| Wandstärke | 1,25 ± 0,5 mm; |
| Porosität | 55 bis 60 %; |
| mittlerer Porendurchmesser | 25 bis 70 µm; |
| spezifische Permeabilität | 20 bis 100 nPm. |

Dabei ist unter einem wechselseitig verschlossenen Wabenkörper ein solcher zu verstehen, wie er sich beispielsweise aus den Figuren 5 und 6 der EP 0 336 883 ergibt und der dadurch gekennzeichnet ist, daß abwechselnd Wabenkanäle auf der Anström- und abwechselnd auf der Abströmseite jeweils endseitig geschlossen ausgebildet sind, so daß das jeweils zu reinigende Gas durch die seitlichen Kanalwände hindurchtreten muß. Der erfindungsgemäße Formkörper hat eine für die rauhen Bedingungen am Dieselmotor ausreichende Festigkeit und andererseits eine hohe Durchströmbarkeit mit geringem Druckverlust.

In Ausbildung der Erfindung ist vorgesehen, daß der spezifische elektrische Widerstand r des Formlings in einem bestimmten Bereich eingestellt werden soll, und zwar vorzugsweise zwischen $r_{min}$ und $r_{max}$ entsprechend nachstehender Formel:

$$r_{min} = \frac{P_{soll}}{I_{max}^2} \times \frac{A_q}{l}$$

$$r_{max} = \frac{U_{max}^2}{P_{soll}} \times \frac{A_q}{l}$$

Dabei sind

| | |
|---|---|
| $P_{soll}$ | die erforderliche elektrische Heizleistung, |
| $I_{max}$ | die maximal tolerierbare Stromstärke, |
| $U_{max}$ | die maximal tolerierbare Spannung, |
| $A_q$ | die stromdurchflossene Querschnittsfläche des Formkörpers und |
| l | die stromdurchflossene Länge des Formkörpers, |

wobei $P_{soll}$ kleiner oder gleich sein soll als $U_{max} \times I_{max}$. Dabei sind unter tolerierbarer Spannung und Stromstärke diejenigen Werte zu verstehen, die unter den jeweiligen anwenderspezifischen Bedingungen nicht überschritten werden sollen oder können. Vorzugsweise sollte der spezifische elektrische Widerstand r des Formkörpers im Bereich von 0,1 bis 3 Ohm x cm liegen.

Zur Einstellung des elektrischen Widerstands eignen sich Verbindungen und/oder Elemente der dritten und fünften Haupt- oder Nebengruppe des Periodensystems. Sie können dem Formkörper zugegeben werden. Ein in Frage kommendes Element ist Bor, das der Formkörper in einer Menge von 0,05 bis 1,0 Gew.-% enthalten sollte, wobei sich diese Menge auf das Element Bor selbst bezieht, auch wenn das Bor - was zweckmäßig ist - in Form einer Verbindung vorliegt, beispielsweise als Borcarbid.

Um einen Formkörper der vorbeschriebenen Art herstellen zu können, wird nach der Erfindung ein Verfahren vorgeschlagen, das auf dem oben zuerst beschriebenen Verfahren gemäß der DE-C-41 30 630 basiert. Erfindungsgemäß wird bei diesem Verfahren jedoch ein Ausgangspulver mit einem Anteil an Primär-Siliciumcarbid von höchstens 25 Gew.-% verwendet und ein Rekristallisationsbrand oberhalb von 2000°C, vorzugsweise im Bereich von 2100 bis 2300°C, durchgeführt. Der Rekristallisationsbrand bewirkt ein deutliches Porenwachstum mit der Folge, daß die Durchströmbarkeit wesentlich verbessert wird. Dies bedeutet, daß die spezifische (werkstoffbezogene) Durchströmbarkeit im Vergleich zu den Formkörpern gemäß der DE-C-41 30 630 (ohne Granulataufbau) wesentlich höher, d. h. günstiger ist. Im Vergleich zu nach der WO93/1330 hergestellten Formkörpern, die mit sehr geringen Wandstärken hergestellt werden müssen, damit sie noch gut durchströmbar sind und zur Dieselrußfiltration noch sinnvoll eingesetzt werden können, können durch das erfindungsgemäße Verfahren hochstabile Formkörper mit wesentlich größeren Wanddicken realisiert werden, die bei gleichem Durchströmwiderstand auch rauhen Einsatzbedingungen gewachsen sind. Auch wird der Durchströmwiderstand der angelagerten Rußschicht hierdurch begünstigt. Der Rekristallisationsbrand erhöht zudem die Abriebfestigkeit des Formkörpers und hat ferner den Vorteil, daß eine bessere Homogenität des Werkstoffs erreicht wird, was günstig insbesondere für den elektrischen Widerstand ist.

Besonders vorteilhaft läßt sich das erfindungsgemäße Verfahren ohne Primär-Siliciumcarbid im Ausgangspulver anwenden. Der durch den Rekristallisationsbrand erzielbare Effekt des Porenwachstums und damit der Verbesserung der Durchströmbarkeit ist dann nämlich am ausgeprägtesten. Sofern die Festigkeit und der Abriebwiderstand des so hergestellten Formkörpers nicht ausreichend ist, kann es jedoch zweckmäßig sein, dem Ausgangspulver Primär-Siliciumcarbid zuzumischen, und zwar in möglichst homogener Verteilung. Um die Mundstücke von Extrusionsaggregaten, die für die Herstellung von Wabenkörpern außerordentlich teuer sind, sowie die Aufbereitungs-, Extrusions- und eventuelle Grünbearbeitungsaggregate zu schonen, ist jedoch nach der Erfindung vorgesehen, den Anteil an Primär-Siliciumcarbid im Ausgangspulver auf maximal 25% zu begrenzen. Dafür spricht auch der Umstand, daß der Effekt des Porenwachstums mit zunehmendem Primär-Siliciumcarbidgehalt im Ausgangspulver abnimmt. Im übrigen läßt sich mit Hilfe der Zugabe von Primär-Siliciumcarbid die elektrische Leitfähigkeit beeinflussen.

Der Reaktions- und der Rekristallisationsbrand können in einem Zug durchgeführt werden, indem der Formkörper kontinuierlich auf die Temperatur des Rekristallisationsbrands gebracht wird. Möglich ist jedoch auch, daß zunächst der Reaktionsbrand und dann - vorzugsweise unmittelbar anschließend - der Rekristallisationsbrand durchgeführt wird. Diese Verfahrensführung bietet mehr Flexibilität insbesondere mit Blick auf eine Verfahrensführung, bei der Schwindungen vermieden werden. Der Reaktionsbrand wird gewöhnlich bei 1400 bis 1900°C, vorzugsweise bei 1700 bis 1900°C durchgeführt.

Als Binder kommen insbesondere solche aus der Gruppe der Kohlehydrate oder deren Modifizierungen in Frage. Als besonders geeignet hat sich Stärke, vor allem modifizierte Stärke, herausgestellt. Sie hat durch eine hohe Kohlenstoffausbeute den Vorzug, daß die von ihr beim Verkoken gebildeten Kohlenstoffbrücken für gute Bindekräfte im thermischen Prozeß sorgen und so die Schwindung beim Verkoken minimal hält, was der Durchströmbarkeit des fertigen Formkörpers zugute kommt.

Der Binder kann bei der Mischung des Ausgangspulvers in Pulverform zugegeben werden. Es besteht jedoch auch die Möglichkeit, einen bei Raumtemperatur flüssigen Binder zu verwenden. Vorzugsweise sollte der Binder wasserlöslich sein. Der Anteil des Binders ist zweckmäßigerweise so eingestellt, daß der gesamte Kohlenstoff in einem stöchiometrischen Verhältnis zum freien Silicium in dem Ausgangspulver liegt.

Aus den schon oben genannten Gründen sollte dem Ausgangspulver zusätzlich einen die elektrische Leitfähigkeit erhöhenden Zusatz in einer Menge der Ausgangsmischung zugemischt wird, daß der spezifische elektrische Widerstand zwischen $r_{min}$ und $r_{max}$ entsprechend der vorstehenden Formel liegt, insbesondere im Bereich von 0,01 bis 3,0 Ohm x cm. Dabei sollte der Zusatz aus Verbindungen und/oder Elementen der dritten und fünften Haupt- oder Nebengruppe des Periodensystems bestehen. Insbesondere kommen Borverbindungen in Frage, die in einer solchen Menge zugegeben werden sollten, daß das elementare Bor in einer Menge von 0,05 bis 1,0 Gew.-% in der Ausgangsmischung vorliegt. Soweit der Zusatz in Pulverform zugemischt wird, sollte die Korngröße nicht über 10 μm liegen.

Schließlich ist nach der Erfindung vorgesehen, daß freies Silicium und/oder Kohlenstoff in einer mittleren Korngröße verwendet wird, die im Bereich 10 bis 70 μm liegt.

## Patentansprüche

1. Poröser durchströmbarer Formkörper (insbesondere zum Abscheiden von Dieselrußpartikeln aus dem Abgas eines Dieselmotors), bestehend aus einem wechselseitig verschlossenen Wabenkörper aus Siliciumcarbid, **gekennzeichnet durch** folgende Merkmale:

| | |
|---|---|
| Wanddicke | 1,25 ± 0,5 mm; |
| Porosität | 55 bis 60 %; |
| mittlerer Porendurchmesser | 25 bis 70 μm; |
| spezifische Permeabilität | 20 bis 100 nPm. |

2. Formkörper nach Anspruch 1,
**dadurch gekennzeichnet, daß** der spezifische elektrische Widerstand r des Formkörpers eingestellt ist zwischen

$$r_{min} = \frac{P_{soll}}{I_{max}^2} \times \frac{A_q}{l}$$

$$r_{max} = \frac{U_{max}^2}{P_{soll}} \times \frac{A_q}{l},$$

wobei

$P_{soll}$    die erforderliche elektrische Heizleistung,
$I_{max}$    die maximal tolerierbare Stromstärke,
$U_{max}$   die maximal tolerierbare Spannung,
$A_q$    die stromdurchflossene Querschnittsfläche des Formkörpers und

l    die stromdurchflossene Länge des Formkörpers

und wobei $P_{soll}$ kleiner oder gleich $U_{max}$ x $I_{max}$ ist.

3. Formkörper nach Anspruch 2,
**dadurch gekennzeichnet, daß** der spezifische elektrische Widerstand r des Formkörpers im Bereich von 0,1 bis 3 Ohm x cm liegt.

4. Formkörper nach einem der Ansprüche 1 bis 3,
**dadurch gekennzeichnet, daß** der Formkörper Verbindungen und/oder Elemente der dritten und fünften Hauptoder Nebengruppe des Periodensystems enthält.

5. Formkörper nach Anspruch 4,
**dadurch gekennzeichnet, daß** der Formkörper Bor in einer Menge von 0,05 bis 1,0 Gew.-% enthält.

6. Verfahren zur Herstellung poröser, durchströmbarer Formkörper aus Siliciumcarbid, bei dem ein Ausgangspulver aus Silicium oder eine Mischung aus Silicium mit Anteilen an Siliciumcarbid und/oder Kohlenstoff zusammen mit einem verkokbaren organischen Binder zu einem Grünkörper geformt, insbesondere stranggepreßt wird, der dann in einer Inertgasatmosphäre einem Verkokungsbrand unterzogen wird, wonach der so entstandene Formkörper in Anwesenheit von Stickstoff oder eines stickstoffhaltigen Inertgases auf eine solche Temperatur erhitzt wird, daß freies Silicium mit dem Kohlenstoff in einem Reaktionsbrand zu Siliciumcarbid umgesetzt wird,
**dadurch gekennzeichnet, daß** ein Ausgangspulver mit einem Anteil an Primär-Siliciumcarbid von höchstens 25 Gew.-% verwendet wird und ein Rekristallisationsbrand oberhalb von 2000°C durchgeführt wird.

7. Verfahren nach Anspruch 6,
**dadurch gekennzeichnet, daß** der Rekristallisationsbrand bei 2100 bis 2300°C durchgeführt wird.

8. Verfahren nach Anspruch 6 oder 7,
**dadurch gekennzeichnet, daß** der Formkörper kontinuierlich auf die Temperatur des Rekristallisationsbrands gebracht wird.

9. Verfahren nach Anspruch 6 oder 7,
**dadurch gekennzeichnet, daß** zunächst der Reaktionsbrand und dann der Rekristallisationsbrand durchgeführt wird.

10. Verfahren nach Anspruch 9,
**dadurch gekennzeichnet, daß** sich der Rekristallisaionsbrand unmittelbar an den Reaktionsbrand anschließt.

**11.** Verfahren nach einem der Ansprüche 6 bis 10, **dadurch gekennzeichnet, daß** der Reaktionsbrand bei 1400 bis 1900°C, vorzugsweise bei 1700 bis 1900°C durchgeführt wird.

**12.** Verfahren nach einem der Ansprüche 6 bis 11, **dadurch gekennzeichnet, daß** als Binder ein solcher aus der Stoffklasse der Kohlehydrate oder deren Modifizierungen verwendet wird.

**13.** Verfahren nach Anspruch 12, daß als Binder modifizierte Stärke verwendet wird.

**14.** Verfahren nach einem der Ansprüche 6 bis 13, **dadurch gekennzeichnet, daß** der Binder dem Ausgangspulver ebenfalls in Pulverform zugegeben wird.

**15.** Verfahren nach einem der Ansprüche 6 bis 11, **dadurch gekennzeichnet, daß** ein bei Raumtemperatur flüssiger Binder verwendet wird.

**16.** Verfahren nach einem der Ansprüche 6 bis 12, **dadurch gekennzeichnet, daß** ein wasserlöslicher Binder verwendet wird.

**17.** Verfahren nach einem der Ansprüche 6 bis 13, **dadurch gekennzeichnet, daß** der Anteil des Binders so eingestellt wird, daß der gesamte Kohlenstoff auch unter Berücksichtigung des im Binder enthaltenen Kohlenstoffs in einem Bereich von 0,8 bis 1,2 des stöchiometrischen Verhältnisses zum freien Silicium im Ausgangspulver liegt.

**18.** Verfahren nach einem der Ansprüche 6 bis 14, **dadurch gekennzeichnet, daß** dem Ausgangspulver ein die elektrische Leitfähigkeit erhöhender Zusatz in einer Menge zugemischt wird, daß der spezifische elektrische Widerstand im Bereich von 0,1 bis 3 Ohm x cm zu liegen kommt.

**19.** Verfahren nach Anspruch 18, **dadurch gekennzeichnet, daß** als Zusatz wenigstens eine Verbindung und/oder ein Element der dritten und fünften Haupt- oder Nebengruppe des Periodensystems zugegeben wird.

**20.** Verfahren nach Anspruch 19, **dadurch gekennzeichnet, daß** als Zusatz eine Borverbindung verwendet wird.

**21.** Verfahren nach Anspruch 20, **dadurch gekennzeichnet, daß** die Borverbindung in einer Menge zugegeben wird, daß Bor in der Ausgangsmischung in einer Menge von 0,05 bis 1,0 Gew.-% vorliegt.

**22.** Verfahren nach einem der Ansprüche 18 bis 21,

**dadurch gekennzeichnet, daß** der Zusatz in Pulverform in einer Korngröße zugegeben wird, die nicht über 10 µm liegt.

**23.** Verfahren nach einem der Ansprüche 6 bis 22, **dadurch gekennzeichnet, daß** freies Silicium und/oder Kohlenstoff in einer mittleren Korngröße verwendet wird, die im Bereich von 10 bis 70 µm liegt.

**Claims**

**1.** Porous permeable body (in particular for separation of diesel soot particles from the waste gas of a diesel engine), comprising an alternately closed honey-comb body of siliconcarbide, **characterised by** the following features:

| | |
|---|---|
| wall thickness | $1.25 \pm 0.5$ mm |
| porosity | 55 to 60 % |
| mean pore diameter | 25 to 70 µm |
| specific permeability | 20 to 100 nPm. |

**2.** Body according to Claim 1, **characterised in that** the specific electrical resistance r of the body is set between

$$r_{min} = \frac{P_{soll}}{I_{max}^2} \times \frac{A_q}{l}$$

$$r_{max} = \frac{U_{max}^2}{P_{soll}} \times \frac{A_q}{l},$$

where

$p_{nominal}$ = required electrical heating output
$I_{max}$ = maximum tolerable strength of current
$U_{max}$ = maximum tolerable voltage
$A_q$ = current-permeable cross-sectional surface of the body, and
$l$ = current-permeable length of the body,

and where $P_{nominal}$ is lower or equal $U_{max} \times I_{max}$.

**3.** Body according to Claim 2, **characterised in that** the specific electric resistance r of the body lies in the region between 0.1 and 3 Ohm x cm.

**4.** Body according to one of Claims 1 to 3, **characterised in that** the body includes links and/or elements of the third and fifth main or subgroup of the periodic system.

**5.** Body according to Claim 4, **characterised in that** the body contains boron at a quantity of between 0.05 and 1.0 weight-%.

**6.** Method for producing porous permeable bodies of siliconcarbide where a base powder of silicon or a mixture of silicon with a proportion of siliconcarbide and/or carbon is prepared together with a cokable organic bonding agent into a green body, in particular extrusion moulded, which is then in an inert gas atmosphere subjected to coking baking, whereafter a thus produced body is in the presence of nitrogen or a nitrogen containing inert gas heated to such temperature that free silicon is converted with the carbon in a reaction baking process to siliconcarbide, **characterised in that** a base powder with a proportion of primary siliconcarbide of maximum 25 weight-% is used and recrystalisation baking above 2,000°C is carried out.

**7.** Method according to Claim 6, **characterised in that** recrystalisation baking is carried out between 2,100 and 2,300°C.

**8.** Method according to Claim 6 or 7, **characterised in that** the body is continuously heated to the temperature of recrystalisation baking.

**9.** Method according to Claim 6 or 7, **characterised in that** initially reaction baking and then recrystalisation baking is carried out.

**10.** Method according to Claim 9, **characterised in that** recrystalisation baking directly follows reaction baking.

**11.** Method according to one of Claims 6 to 10, **characterised in that** reaction baking is carried out at between 1,400 and 1,900°C, preferably between 1,700 and 1,900°C.

**12.** Method according to one of Claims 6 to 11, **characterised in that** the bonding agent is of the material class of carbon hydrates or its modifications.

**13.** Method according to Claim 12, **characterised in that** modified starch is used as bonding agent.

**14.** Method according to one of Claims 6 to 13, **characterised in that** the bonding agent is added to the base powder in the form of powder as well.

**15.** Method according to one of Claims 6 to 11, **characterised in that** a bonding agent is used which is liquid at room temperature.

**16.** Method according to one of Claims 6 to 12, **characterised in that** a water soluble bonding agent is used.

**17.** Method according to one of Claims 6 to 13, **characterised in that** the proportion of the bonding agent is set so that the entire carbon lies, even taking into consideration carbon contained in the bonding agent, within 0.8 and 1.2 of the stoichiometric ratio to the free silicon in the base powder.

**18.** Method according to one of Claims 6 to 14, **characterised in that** into the base powder is mixed an additive which increases the electrical conductivity at a volume so that the specific electrical resistance lies between 0.1 and 3 Ohm x cm.

**19.** Method according to Claim 18, **characterised in that** an additive in the form of at least one composite and/or an element of the third and fifth main or subgroup of the periodic system is added.

**20.** Method according to Claim 19, **characterised in that** a boron composite is used as additive.

**21.** Method according to Claim 20, **characterised in that** the boron composite is added at a volume so that boron is present in the base mixture at between 0.05 and 1.0 weight-%.

**22.** Method according to one of Claims 18 to 21, **characterised in that** the addition in the form of a powder has a grain size of not more than 10 μm.

**23.** Method according to one of Claims 6 to 22, **characterised in that** free silicon and/or carbon is used at a mean grain size of between 10 and 70 μm.

**Revendications**

**1.** Corps moulé poreux pouvant être traversé par un fluide (notamment pour extraire des particules de calamine des gaz d'échappement d'un moteur diesel), composé d'un corps alvéolé en carbure de silicium fermé de tous côtés, **caractérisé par** les caractéristiques suivantes :

| épaisseur de paroi | 1,25 ± 0,5 mm ; |
| porosité | 55 à 60 % ; |
| diamètre moyen des pores | 25 à 70 μm ; |
| perméabilité spécifique | 20 à 100 nPm.. |

**2.** Corps moulé selon la revendication 1, **caractérisé en ce que** la résistivité r du corps moulé se situe entre

$$r_{min} = \frac{P_{soll}}{I_{max}^2} \times \frac{A_q}{l}$$

$$r_{min} = \frac{U_{max}^2}{P_{soll}} \times \frac{A_q}{l},$$

sachant que

| | |
|---|---|
| $P_{soll}$ | est la puissance de chauffage électrique requise, |
| $I_{max}$, | l'intensité maximale admissible, |
| $U_{max}$, | la tension maximale admissible, |
| $A_q$, | la superficie de la section transversale du corps moulé qui est traversée par le courant, et |
| $l$, | la longueur du corps moulé parcourue par le courant, |

et que $P_{soll}$ est inférieur ou égal à $U_{max} \times I_{max}$.

**3.** Corps moulé selon la revendication 2, **caractérisé en ce que** la résistivité r du corps moulé est comprise entre 0,1 et 3 ohms x cm.

**4.** Corps moulé selon l'une des revendications 1 à 3, **caractérisé en ce que** le corps moulé contient des composés et/ou des éléments appartenant aux troisième et cinquième groupes ou sous-groupes du tableau de la classification périodique des éléments.

**5.** Corps moulé selon la revendication 4, **caractérisé en ce que** le corps moulé contient une quantité de bore comprise entre 0,05 et 1,0 % en poids.

**6.** Procédé pour fabriquer des corps moulés poreux en carbure de silicium pouvant être traversés par un fluide, selon lequel on moule, notamment on extrude un corps de base à partir de poudre de silicium brute ou d'un mélange de silicium et de parties de carbure de silicium et/ou de carbone, à laquelle (auquel) on a mélangé un liant organique cokéfiable, lequel corps de base subit ensuite une cokéfaction dans une atmosphère de gaz inerte, après quoi le corps moulé ainsi obtenu est chauffé en présence d'azote ou d'un gaz inerte contenant de l'azote à une température telle que du silicium libre et le carbone sont transformés en carbure de silicium par une cuisson de réaction, **caractérisé en ce que** l'on utilise une poudre brute contenant une proportion de carbure de silicium primaire de 25 % en poids au maximum et **en ce que** l'on effectue une cuisson de recristallisation à une température supérieure à 2000° C.

**7.** Procédé selon la revendication 6, **caractérisé en ce que** la cuisson de recristallisation a lieu à une température comprise entre 2100 et 2300° C.

**8.** Procédé selon la revendication 6 ou 7, **caractérisé**

**en ce que** le corps moulé est amené progressivement à la température de la cuisson de recristallisation.

**9.** Procédé selon la revendication 6 ou 7, **caractérisé en ce que** l'on procède à la cuisson de réaction avant d'effectuer la cuisson de recristallisation.

**10.** Procédé selon la revendication 9, **caractérisé en ce que** la cuisson de recristallisation fait immédiatement suite à la cuisson de réaction.

**11.** Procédé selon l'une des revendications 6 à 10, **caractérisé en ce que** la cuisson de réaction se produit entre 1400 et 1900° C, de préférence entre 1700 et 1900° C.

**12.** Procédé selon l'une des revendications 6 à 11, **caractérisé en ce que** l'on utilise en tant que liant un liant appartenant à la catégorie des glucides ou de leurs versions modifiées.

**13.** Procédé selon la revendication 12, **caractérisé en ce que** l'on utilise en tant que liant de l'amidon modifié.

**14.** Procédé selon l'une des revendications 6 à 13, **caractérisé en ce que** l'on ajoute le liant à la poudre brute également sous forme de poudre.

**15.** Procédé selon l'une des revendications 6 à 11, **caractérisé en ce que** l'on utilise un liant qui est liquide à température ambiante.

**16.** Procédé selon l'une des revendications 6 à 12, **caractérisé en ce que** l'on utilise un liant hydrosoluble.

**17.** Procédé selon l'une des revendications 6 à 13, **caractérisé en ce que** la proportion de liant est telle qu'en prenant en compte le carbone contenu dans le liant, le rapport stoechiométrique entre la quantité totale de carbone et la quantité de silicium libre dans la poudre brute est compris entre 0,8 et 1,2.

**18.** Procédé selon l'une des revendications 6 à 14, **caractérisé en ce que** l'on ajoute à la poudre brute un additif augmentant la conductivité dans une proportion telle que la résistivité se situe dans une fourchette comprise entre 0,1 et 3 ohms x cm.

**19.** Procédé selon la revendication 18, **caractérisé en ce que** l'on ajoute en tant qu'additif au moins un composé et/ou un élément appartenant aux troisième et cinquième groupes ou sous-groupes du tableau de la classification périodique des éléments.

**20.** Procédé selon la revendication 19, **caractérisé en**

**ce que** l'on utilise en tant qu'additif un composé à base de bore.

21. Procédé selon la revendication 20, **caractérisé en ce que** le composé borique est ajouté en quantité telle que le mélange de départ contient une quantité de bore comprise entre 0,05 et 1,0 % en poids.

22. Procédé selon l'une des revendications 18 à 21, **caractérisé en ce que** l'additif en poudre ajouté au mélange présente une grosseur de grains qui n'excède pas 10 μm.

23. Procédé selon l'une des revendications 6 à 22, **caractérisé en ce que** l'on utilise du silicium libre et/ ou du carbone ayant une grosseur de grains comprise entre 10 et 70 μm.